# EUROPEAN PATENT APPLICATION

(11) **EP 4 598 117 A1**
(43) Date of publication of application: **06.08.2025**
(21) Application number: 22960181.0
(22) Date of filing: 29.09.2022
(51) Int. Cl.: H04W 36/00

(54) **SWITCHING INSTRUCTION METHOD AND APPARATUS, DEVICE, CHIP SYSTEM, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Stöckeler, Ferdinand
(86) International application number: PCT/CN2022/122939
(87) International publication number: WO 2024/065546

(57) **Abstract**

The embodiments of the present disclosure disclose a switching indication method and apparatus, a device, a chip system, and a storage medium, which can be applied to a communication system. The method comprises: in response to determining that a terminal device needs to switch to a target cell, sending a first indication message to the terminal device, the first indication message being used for instructing the terminal device to switch to the target cell, and the target cell being determined via a beam measurement result. Because the beam measurement result is an L1 measurement result, and a cell measurement result does not need to be obtained via L3 processing, and because the beam measurement result does not rely on RRC signaling to instruct switching, implementing the method of the present disclosure effectively reduces switching indication time overhead and effectively improves switching efficiency.

## Description

### TECHNICAL FIELD

The present disclosure relates to the field of communication technology, and specifically to a switching indication method and apparatus, a device, a chip system and a storage medium.

### BACKGROUND

When a terminal is in a connected state, a network device implements mobility management of the terminal through a switching procedure. Traditional network controlled mobility includes cell level mobility and beam level mobility. The cell level mobility depends on radio resource control (RRC) signaling. In some versions of communication protocols (for example, the 18th version (Rel-18) of the 3rd Generation Partnership Project (3GPP)), a concept of enhancing L1/L2-based inter-cell mobility centered on layer 1 (L1)/layer 2 (L2) is introduced.

In the related art, the mobility management of the terminal is usually based on a measurement result of a layer 3 (L3) cell, which depends on the RRC signaling, thereby introducing more time overhead and affecting switching efficiency.

### SUMMARY

Embodiments of the present disclosure provide a switching indication method and apparatus, a device, a chip system, a storage medium, a computer program and a computer program product, which may be applied in the field of communication technology, effectively reduce time overhead of switching indication and effectively improve switching efficiency.

According to a first aspect of the embodiments of the present disclosure, a switching indication method is provided, performed by a first network device, including: sending a first indication message to a terminal in response to determining that the terminal needs to switch to a target cell, in which the first indication message instructs the terminal to switch to the target cell, and the target cell is determined by a beam measurement result.

In the switching indication method provided by the embodiments of the present disclosure, the method further includes:
receiving the beam measurement result reported by the terminal; and
determining, according to the beam measurement result, that the terminal needs to switch to the target cell.

In the switching indication method provided by the embodiments of the present disclosure, the first indication message is carried in at least one of following signalings:
a media access control control element (MAC CE) signaling; or
a downlink control information (DCI) signaling.

In the switching indication method provided by the embodiments of the present disclosure, the first indication message is carried in a MAC CE signaling, wherein the MAC CE signaling comprises at least one of:
cell indication information of the target cell; or
beam indication information of the target cell.

In the switching indication method provided by the embodiments of the present disclosure, the cell indication information comprises any of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

In the switching indication method provided by the embodiments of the present disclosure, the beam indication information of the target cell comprises at least one of:
a transmission configuration indicator (TCI) state of the target cell, wherein the TCI state of the target cell is used to determine a beam of the target cell; or
activation indication information of a TCI state of at least one target cell, wherein the TCI state of the target cell is used to determine a beam of the target cell.

In the switching indication method provided by the embodiments of the present disclosure, the first indication message is carried in a DCI signaling, wherein the DCI signaling comprises at least one of:
cell indication information of the target cell; or
beam indication information of the target cell.

In the switching indication method provided by the embodiments of the present disclosure, the DCI signaling comprises a first indication field, a value of the first indication field indicates the cell indication information.

In the switching indication method provided by the embodiments of the present disclosure, the cell indication information comprises any of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

In the switching indication method provided by the embodiments of the present disclosure, the DCI signaling comprises a second indication field, a value of the second indication field indicates the beam indication information of the target cell.

In the switching indication method provided by the embodiments of the present disclosure, the beam indication information of the target cell comprises at least one of:
an indicated and activated TCI state of the target cell, wherein the indicated and activated TCI state of the target cell is used to determine a beam of the target cell.

In the switching indication method provided by the embodiments of the present disclosure, the method further comprises:
receiving a second indication message sent by the terminal, wherein the second indication message indicates that the terminal has received the DCI signaling.

In the switching indication method provided by the embodiments of the present disclosure, the second indication message comprises at least one of:
a hybrid automatic repeat request (HARQ) feedback message of the DCI signaling; or
a HARQ feedback message of a TCI.

According to a second aspect of the embodiments of the present disclosure, a switching indication method is provided, performed by a terminal, including: receiving a first indication message sent by a first network device, in which the first indication message instructs the terminal to switch to a target cell, and the target cell is determined by a beam measurement result.

In the switching indication method provided by the embodiments of the present disclosure, the method further comprises:
obtaining the beam measurement result by performing measurement on at least one beam; and
reporting the beam measurement result to the first network device.

In the switching indication method provided by the embodiments of the present disclosure, the first indication message is carried in at least one of following signalings:
a media access control control element (MAC CE) signaling; or
a downlink control information (DCI) signaling.

In the switching indication method provided by the embodiments of the present disclosure, the first indication message is carried in a MAC CE signaling, wherein the MAC CE signaling comprises at least one of:
cell indication information of the target cell; or
beam indication information of the target cell.

In the switching indication method provided by the embodiments of the present disclosure, the cell indication information comprises any of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

In the switching indication method provided by the embodiments of the present disclosure, the beam indication information of the target cell comprises at least one of:
a transmission configuration indicator (TCI) state of the target cell, wherein the TCI state of the target cell is used to determine a beam of the target cell; or
activation indication information of a TCI state of at least one target cell, wherein the TCI state of the target cell is used to determine a beam of the target cell.

In the switching indication method provided by the embodiments of the present disclosure, the first indication message is carried in a DCI signaling, wherein the DCI signaling comprises at least one of:
cell indication information of the target cell; or
beam indication information of the target cell.

In the switching indication method provided by the embodiments of the present disclosure, the DCI signaling comprises a first indication field, a value of the first indication field indicates the cell indication information.

In the switching indication method provided by the embodiments of the present disclosure, the cell indication information comprises any of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

In the switching indication method provided by the embodiments of the present disclosure, the DCI signaling comprises a second indication field, a value of the second indication field indicates the beam indication information of the target cell.

In the switching indication method provided by the embodiments of the present disclosure, the beam indication information of the target cell comprises at least one of:
an indicated and activated TCI state of the target cell, wherein the indicated and activated TCI state of the target cell is used to determine a beam of the target cell.

In the switching indication method provided by the embodiments of the present disclosure, the method further comprises:
sending a second indication message to the first network device, wherein the second indication message indicates that the terminal has received the DCI signaling.

In the switching indication method provided by the embodiments of the present disclosure, the second indication message comprises at least one of:
a hybrid automatic repeat request (HARQ) feedback message of the DCI signaling; or
a HARQ feedback message of a TCI.

In the switching indication method provided by the embodiments of the present disclosure, the method further comprises:
sending a third indication message to a second network device, wherein the third indication message indicates that the terminal has switched to the target cell.

In the switching indication method provided by the embodiments of the present disclosure, sending the third indication message to the second network device comprises at least one of:
sending the third indication message to the second network device based on a random access channel;
sending the third indication message to the second network device based on a reserved resource related to the target cell; or
sending the third indication message to the second network device based on a resource scheduled by the first indication message.

In the switching indication method provided by the embodiments of the present disclosure, the reserved resource comprises at least one of:
a physical uplink shared channel (PUSCH) resource; or
a scheduling request (SR) resource.

According to a third aspect of the embodiments of the present disclosure, a switching indication method is provided, performed by a second network device, including: determining that a terminal has switched to a target cell, in which the target cell is determined by a beam measurement result.

In the switching indication method provided by the embodiments of the present disclosure, determining that the terminal has switched to the target cell comprises:
receiving a third indication message sent by the terminal, wherein the third indication message indicates that the terminal has switched to the target cell.

In the switching indication method provided by the embodiments of the present disclosure, receiving the third indication message sent by the terminal comprises at least one of:
receiving the third indication message sent by the terminal based on a random access channel;
receiving the third indication message sent by the terminal based on a reserved resource related to the target cell; or
receiving the third indication message sent by the terminal based on a resource scheduled by a first indication message, wherein the first indication message is used for the first network device to indicate that the terminal is switched to the target cell.

In the switching indication method provided by the embodiments of the present disclosure, the reserved resource comprises at least one of:
a physical uplink shared channel (PUSCH) resource; or
a scheduling request (SR) resource.

According to a fourth aspect of the embodiments of the present disclosure, a communication apparatus is provided. The communication apparatus has some or all of the functions of the first network device in the method embodiment in the first aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

Optionally, in an embodiment, the communication apparatus may include a transceiver module and a processing module, in which the processing module is configured to support the communication apparatus to perform the corresponding functions in the above method, the transceiver module is configured to support a communication between the communication apparatus and other devices. The communication apparatus may also include a storage module, in which the storage module is configured to couple with the transceiver module and the processing module, and save a computer program and data necessary for the communication apparatus.

As an example, the processing module may be a processor, the transceiver module may be a transceiver or a communication interface, and the storage module be a memory.

According to a fifth aspect of the embodiments of the present disclosure, a communication apparatus is provided. The communication apparatus has some or all of the functions of the terminal in the method embodiment in the second aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

Optionally, in an embodiment, the communication apparatus may include a transceiver module and a processing module, in which the processing module is configured to support the communication apparatus to perform the corresponding functions in the above method, the transceiver module is configured to support a communication between the communication apparatus and other devices. The communication apparatus may also include a storage module, in which the storage module is configured to couple with the transceiver module and the processing module, and save a computer program and data necessary for the communication apparatus.

According to a sixth aspect of the embodiments of the present disclosure, a communication apparatus is provided. The communication apparatus has some or all of the functions of the second network device in the method embodiment in the third aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

Optionally, in an embodiment, the communication apparatus may include a transceiver module and a processing module, in which the processing module is configured to support the communication apparatus to perform the corresponding functions in the above method, the transceiver module is configured to support a communication between the communication apparatus and other devices. The communication apparatus may also include a storage module, in which the storage module is configured to couple with the transceiver module and the processing module, and save a computer program and data necessary for the communication apparatus.

According to a seventh aspect of the embodiments of the present disclosure, a communication apparatus including a processor. When a computer program stored in a memory is called by the processor, the switching indication method described in the first aspect is implemented.

According to an eighth aspect of the embodiments of the present disclosure, a communication apparatus including a processor. When a computer program stored in a memory is called by the processor, the switching indication method described in the second aspect is implemented.

According to a ninth aspect of the embodiments of the present disclosure, a communication apparatus including a processor. When a computer program stored in a memory is called by the processor, the switching indication method described in the third aspect is implemented.

According to a tenth aspect of the embodiments of the present disclosure, a communication apparatus including a processor and a memory for storing a computer program is provided. When the computer program stored in a memory is executed by the processor, the communication apparatus is caused to implement the switching indication method described in the first aspect.

According to an eleventh aspect of the embodiments of the present disclosure, a communication apparatus including a processor and a memory for storing a computer program is provided. When the computer program stored in a memory is executed by the processor, the communication apparatus is caused to implement the switching indication method described in the second aspect.

According to a twelfth aspect of the embodiments of the present disclosure, a communication apparatus including a processor and a memory for storing a computer program is provided. When the computer program stored in a memory is executed by the processor, the communication apparatus is caused to implement the switching indication method described in the third aspect.

According to a thirteenth aspect of the embodiments of the present disclosure, a communication apparatus is provided, including a processor and an interface circuit for receiving code instructions and sending the code instructions to the processor, in which the processor is configured to execute the code instructions to cause the apparatus to perform the switching indication method described in the first aspect.

According to a fourteenth aspect of the embodiments of the present disclosure, a communication apparatus is provided, including a processor and an interface circuit for receiving code instructions and sending the code instructions to the processor, in which the processor is configured to execute the code instructions to cause the apparatus to perform the switching indication method described in the second aspect.

According to a fifteenth aspect of the embodiments of the present disclosure, a communication apparatus is provided, including a processor and an interface circuit for receiving code instructions and sending the code instructions to the processor, in which the processor is configured to execute the code instructions to cause the apparatus to perform the switching indication method described in the third aspect.

According to a sixteenth aspect of the embodiments of the present disclosure, a communication system is provided, in which the system includes the communication apparatus described in the fourth aspect, the communication apparatus described in the fifth aspect and the communication apparatus described in the sixth aspect, or the system includes the communication apparatus described in the seventh aspect, the communication apparatus described in the eighth aspect and the communication apparatus described in the ninth aspect, or the system includes the communication apparatus described in the tenth aspect, the communication apparatus described in the eleventh aspect and the communication apparatus described in the twelfth aspect, or the system includes the communication apparatus described in the thirteenth aspect, the communication apparatus described in the fourteenth aspect and the communication apparatus described in the fifteenth aspect.

According to a seventeenth aspect of the embodiments of the present disclosure, a computer-readable storage medium for storing instructions used by the terminal is provided. When the instructions are executed, the terminal is caused to implement the switching indication method described above.

According to an eighteenth aspect of the embodiments of the present disclosure, a computer program product including a computer program is provided. When the computer program is running on a computer, the computer is caused to perform the switching indication method described above.

According to a nineteenth aspect of the embodiments of the present disclosure, a chip system is provided, including at least one processor and an interface configured to support the first network device to perform the functions in the first aspect, for example, at least one of determining or processing data and information in the above method.

**In** one possible design, the chip system also includes a memory for saving a computer program and data necessary for the source secondary node. The chip system may include a chip, or a chip and other discrete devices.

According to a twentieth aspect of the embodiments of the present disclosure, a chip system is provided, including at least one processor and an interface configured to support the terminal to perform the functions in the second aspect, for example, at least one of determining or processing data and information in the above method.

In one possible design, the chip system also includes a memory for saving a computer program and data necessary for the source secondary node. The chip system may include a chip, or a chip and other discrete devices.

According to a twenty first aspect of the embodiments of the present disclosure, a chip system is provided, including at least one processor and an interface configured to support the third network device to perform the functions in the third aspect, for example, at least one of determining or processing data and information in the above method.

**In** one possible design, the chip system also includes a memory for saving a computer program and data necessary for the source secondary node. The chip system may include a chip, or a chip and other discrete devices.

According to a twenty second aspect of the embodiments of the present disclosure, a computer program is provided. When the computer program is running on a computer, the computer is caused to implement the switching indication method described above.

In summary, the measurement method, the switching indication method and apparatus, the device, the chip system, the storage medium, the computer program and the computer program product in the embodiments of the present disclosure may achieve the following technical effects.

When it is determined that the terminal needs to switch to the target cell based on the beam measurement result, the first indication message is sent to the terminal, in which the first indication message is used to instruct the terminal to switch to the target cell. Since the beam measurement result is the measurement result of L1, it does not need to be processed by L3 to obtain a cell measurement result, and the beam measurement result does not rely on an RRC signaling for switching indication, the time overhead for the switching indication is effectively reduced and the switching efficiency is effectively improved.

### BRIEF DESCRIPTION OF THE DRAWINGS

In order to clearly illustrate technical solutions of the embodiments and the background of the present disclosure, a brief description of drawings used in embodiments and the background is given below.
FIG. 1 is a schematic diagram of a communication system according to an embodiment of the present disclosure;
FIG. 2 is a flowchart of a switching indication method according to an embodiment of the present disclosure;
FIG. 3 is a flowchart of a switching indication method according to an embodiment of the present disclosure;
FIG. 4 is a flowchart of a switching indication method according to an embodiment of the present disclosure;
FIG. 5 is a flowchart of a switching indication method according to an embodiment of the present disclosure;
FIG. 6 is a flowchart of a switching indication according to an embodiment of the present disclosure;
FIG. 7 is a flowchart of a switching indication method according to another embodiment of the present disclosure;
FIG. 8 is a flowchart of a switching indication method according to another embodiment of the present disclosure;
FIG. 9 is a flowchart of a switching indication method according to another embodiment of the present disclosure;
FIG. 10 is a flowchart of a switching indication method according to another embodiment of the present disclosure;
FIG. 11 is a block diagram of a communication apparatus according to an embodiment of the present disclosure;
FIG. 12 is a block diagram of a communication apparatus according to another embodiment of the present disclosure;
FIG. 13 is a block diagram of a chip according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first message may also be referred to as the second information, and likewise the second information may be referred to as the first message. Depending on the context, the words "if" and "in a case" used here may be interpreted as "when" or "in response to determining".

For ease of understanding, the terms involved in the disclosure are introduced firstly.

### 1. Cell switching (Channel Switch)

In the wireless communication system, when a terminal moves from one cell (referring to a base station or a coverage area of the base station) to another cell, channel switching is required to maintain uninterrupted communication for mobile users. How to successfully and quickly complete cell switching is one of the important aspects of cellular cell system design in the wireless communication system.

### 2. Random access

Random access refers to a process from sending by a user a random access preamble to try to access the network to establishing a basic signaling connection with the network. Random access is a very critical step in a mobile communication system and is also the last step in establishing a communication link between a terminal and a base station. Random access is classified into competitive random access and non-competitive random access.

### 3. Radio Resource Control (RRC)

RRC, also known as radio resource management (RRM) or radio resource allocation (RRA), refers to the management, control and scheduling of radio resources through certain strategies and means. It makes full use of limited wireless network resources as much as possible while meeting a quality of service requirement, to ensure that a planned coverage area is reached and improve a service capacity and a resource utilization rate as much as possible.

### 4. Downlink control information (DCI)

DCI refers to downlink control information sent by an eNB to a UE and carried by a physical downlink control channel (PDCCH), including uplink and downlink resource allocation, HARQ information, power control, etc.

In order to better understand a switching indication method in the embodiments of the present disclosure, a communication system to which the embodiments of the present disclosure are applicable is firstly described as follows.

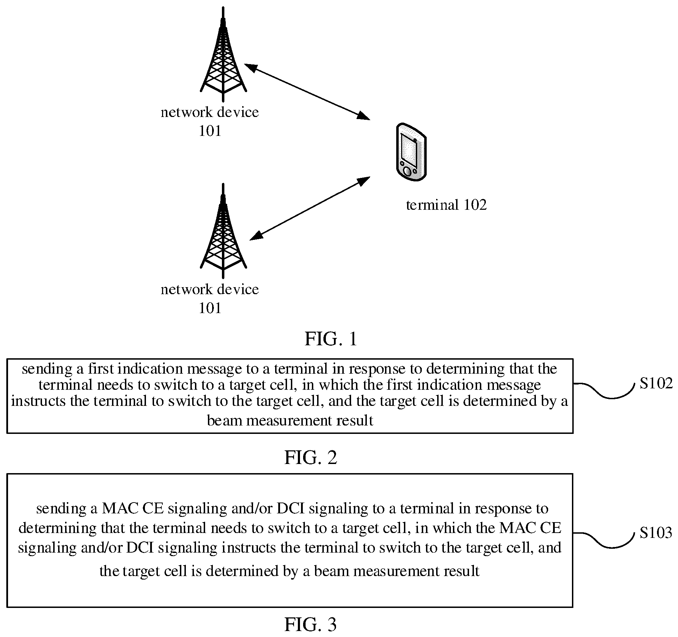

Please refer to FIG. 1, which is a schematic diagram of a communication system according to an embodiment of the present disclosure. The communication system may include, but is not limited to, one network device and one terminal. The number and form of devices shown in FIG. 1 are only shown as an example, and do not constitute a limitation on the embodiments of the present disclosure. The communication system may include two or more network devices and two or more terminals in a practical application. The communication system in FIG. 1 including two network devices 101 and one terminal 12 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future.

The network device 101 in the embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access point in a wireless fidelity (WiFi) system. The embodiments of the present disclosure do not limit the specific technology and the specific device form used by the network device.

The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 102 in the embodiments of the present disclosure is an entity on the user side for receiving or sending signals, such as a mobile phone. Terminal may also be called, a terminal device, a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc.

The embodiments of the present disclosure do not limit the specific technology and the specific device form used by the terminal.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

During a cell switching procedure, a cell that currently provides communication services to the terminal may be called a serving cell, and a network device of the serving cell may be called a first network device. The first network device is for example a source base station in the cell switching procedure. Correspondingly, a serving cell to be switched to may be called a target cell, and a network device of the target cell may be called a second network device. The second network device is for example a target base station in the cell switching procedure. The present disclosure is not limited thereto.

The switching indication method provided in the embodiments of the present disclosure will now be further described with reference to the accompanying drawings. FIG. 2 is a flowchart of a switching indication method according to an embodiment of the present disclosure. The method is performed by a first network device. The switching indication method in this embodiment may be applied in the first network device, which is not limited herein.

As illustrated in FIG. 2, the method may include the following steps.

At step S102, a first indication message is sent to a terminal in response to determining that the terminal needs to switch to a target cell. The first indication message instructs the terminal to switch to the target cell, and the target cell is determined by a beam measurement result.

In this embodiment, the first network device of a serving cell that currently provides communication services to the terminal may send a dynamic switching indication to the terminal, for example, a dynamic switching message may be sent to the terminal, and the dynamic switching message may be referred to as the first indication message.

In an embodiment of the present disclosure, the first network device may determine whether the terminal needs to switch to the target cell based on the beam measurement result of the terminal. The beam measurement result may be reported by the terminal to the first network device. The beam measurement result may, for example, include beam qualities in each candidate cell and the serving cell. The beam quality may, for example, be layer 1 reference signal receiving power (L1-RSRP) or layer 1 signal to interference plus noise ratio (L1-SINR). The first network device may determine whether the terminal needs to switch to the target cell based on the beam measurement result. In response to determining that the terminal needs to switch to the target cell, the first network device sends the first indication message to the terminal to instruct the terminal to switch to the target cell based on the first indication message.

In an embodiment of the present disclosure, the beam measurement result is a measurement result of L1, it needs not to be subject to L3 processing to obtain a cell measurement result, and the beam measurement result does not rely on an RRC signaling for switching indication, so that the time overhead of the switching indication may be effectively reduced and the switching efficiency may be effectively improved.

In this embodiment, when it is determined that the terminal needs to switch to the target cell based on the beam measurement result, the first indication message is sent to the terminal, in which the first indication message is used to instruct the terminal to switch to the target cell. Since the beam measurement result is the measurement result of L1, it does not need to be processed by L3 to obtain a cell measurement result, and the beam measurement result does not rely on an RRC signaling for switching indication, the time overhead for the switching indication is effectively reduced and the switching efficiency is effectively improved.

With the switching indication method provided by the embodiments of the present disclosure, the first network device may receive the beam measurement result reported by the terminal, and determine, based on the beam measurement result, that the terminal needs to switch to the target cell, so as to quickly determine whether the terminal needs to switch to the target cell based on the beam measurement result of L1, and effectively support the first network device to promptly indicate cell switching to the terminal.

The beam measurement result may, for example, include the beam quality in each candidate cell and the beam quality in the serving cell, of course, the beam measurement result may also include any other parameters that can represent beam measurement statuses in each candidate cell and the serving cell, which is not limited herein.

After receiving the beam measurement results reported by the terminal, the first network device may analyze whether a service quality of a candidate cell is better than that of the serving cell based on the beam measurement results. If so, the candidate cell that is better than the serving cell may be used as the target cell, and then a switching indication may be sent to the terminal. The present disclosure is not limited thereto.

FIG. 3 is a flowchart of a switching indication method according to an embodiment of the present disclosure. The method is performed by a first network device. The switching indication method in this embodiment may be applied in the first network device, which is not limited herein.

As illustrated in FIG. 3, the method may include but is not limited to the following steps.

At step S103, a media access control control element (MAC CE) signaling and/or downlink control information (DCI) signaling is sent to a terminal in response to determining that the terminal needs to switch to a target cell. The MAC CE signaling and/or DCI signaling instructs the terminal to switch to the target cell, and the target cell is determined by a beam measurement result.

In an embodiment of the present disclosure, when the first network device determines that the terminal needs to switch to the target cell based on the beam measurement result, the first network device may send the MAC CE signaling and/or DCI signaling to the terminal to instruct the terminal to switch to the target cell based on the MAC CE signaling and/or DCI signaling.

n an embodiment of the present disclosure, the first network device may send the MAC CE signaling to the terminal to instruct the terminal to switch to the target cell based on the MAC CE signaling, or the first network device may send the DCI signaling to the terminal to instruct the terminal to switch to the target cell based on the DCI signaling, the first network device may send the MAC CE signaling and the DCI signaling to the terminal to instruct the terminal to switch to the target cell based on the MAC CE signaling and the DCI signaling, or the first network device may send a switching command, the MAC CE signaling and the DCI signaling to the terminal to instruct the terminal to switch to the target cell based on the switching command, the MAC CE signaling and the DCI signaling, which is not limited herein.

In this embodiment, when it is determined that the terminal needs to switch to the target cell, the MAC CE signaling and/or DCI signaling is sent to the terminal to instruct the terminal to switch to the target cell. Without relying on a RRC signaling for switching indication, the first network device may instruct the terminal to switch to the target cell based on the MAC CE signaling and/or DCI signaling, thereby effectively instructing the terminal to perform cell switching and greatly improving the switching efficiency.

The embodiments of the present disclosure provide a method for designing an indication message, which will be described specifically as follows.

The embodiments of the present disclosure provide a method for designing an indication message, the first indication message is carried in a MAC CE signaling; in which the MAC CE signaling includes at least one of: cell indication information of the target cell; or beam indication information of the target cell, so as to flexibly instruct the terminal to switch to the target cell based on the MAC CE signaling.

The indication information used to indicate relevant information of the target cell may be called the cell indication information, and the indication information used to indicate beam-related information of the target cell may be called the beam indication information.

By designing the cell indication information and/or beam indication information of the target cell for the MAC CE signaling, it is possible to accurately indicate cell switching to the terminal based on the MAC CE signaling.

The embodiments of the present disclosure provide a method for designing an indication message, the cell indication information includes any of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

That is to say, in the embodiments of the present disclosure, the MAC CE signaling is designed based on any of the above methods for designing an indication message to instruct the terminal to perform cell switching based on the MAC CE signaling, which may effectively improve flexibility and applicability of the switching indication and may effectively adapt to a variety of communication scenarios, so that the switching indication may flexibly adapt to personalized needs of the communication scenarios.

For example, the cell indication information may include at least the ID of the target cell, which may be used to determine the target cell to support accurate cell switching of the terminal. The ID of the target cell may be a physical cell ID of the cell.

For example, in case of a non-carrier aggregation (CA) scenario, the target cell indicated by the ID may be used as a primary cell (PCell).

For example, in case of a CA scenario, the target cell indicated by the ID may be used as the primary cell (PCell). For a new secondary cell (Scell), the Scell before the switching may be used as the new Scell after the switching by default; or all Scells before the switching may be released and a new Scell may be reconfigured after the switching is completed by default, which is not limited herein.

For example, in a case of a dual connection (DC) scenario, an additional ID is required to indicate whether the target cell is a PCell or a primary secondary cell (PSCell). For the new Scell, the Scell before the switching may be used as the new Scell after the switching by default; or the Scell before the switching may be released and a new Scell may be reconfigured after the switching is completed by default, which is not limited herein.

For example, if a configuration parameter of each candidate cell is included in an RRC reconfiguration parameter RRCReconfiguration, then the MAC CE signaling used for switching indication may include at least an ID of the RRC configuration parameter corresponding to the target cell, and the ID may be used to determine a corresponding RRC configuration parameter, which may be used to support the terminal to perform accurate cell switching.

For example, if a configuration parameter of each candidate cell is included in a cell group configuration information element CellGroupConfig IE, then the MAC CE signaling used for switching indication may include at least an ID of a cell group configuration CellGroupConfig corresponding to the target cell, and the ID may be used to determine the CellGroupConfig corresponding to the target cell, which may be used to support the terminal to perform accurate cell switching.

For different communication scenarios, there are different methods for designing the ID of the CellGroupConfig corresponding to the target cell. Examples will be provided as follows.

For example, in a case of a non-DC scenario, the MAC CE signaling used for switching indication may include at least the ID of the CellGroupConfig corresponding to the target cell. The ID may be used to determine the CellGroupConfig to support the terminal to switch to the target cell based on the CellGroupConfig indicated by the ID.

For example, in a case of a DC scenario, the MAC CE signaling used for switching indication may include an ID of only one cell group configuration CellGroupConfig, in which the ID is used to determine a master cell group (MCG). In this case, a cell group corresponding to the CellGroupConfig indicated by the ID may be a new MCG by default, and a secondary cell group (SCG) before the switching may still be the SCG of the terminal by default. Alternatively, the SCG before the switching may be released, or an ID may be introduced to indicate that the cell group corresponding to the cellgroupconfig is used as the MCG or SCG.

For example, in a case of a DC scenario, the MAC CE signaling used for switching indication may indicate IDs of two cell group configurations CellGroupConfig, that is, indicating an ID of one cell group configuration CellGroupConfig (the ID is used to determine the MCG), and indicating an ID of another cell group configuration CellGroupConfig (a cell group corresponding to the CellGroupConfig indicated by the ID is the new SCG). Whether an ID corresponds to the MCG or the SCG can be indicated by the first network device in an explicit or implicit manner, which is not limited herein.

For example, if a configuration parameter of each candidate cell is included in a special cell configuration information element SpCellConfig IE, the MAC CE signaling used for switching indication may include at least an index corresponding to the SpCellConfig corresponding to the target cell. The index may be used to determine a corresponding SpCellConfig to support the terminal to accurately switch to the target cell based on the SpCellConfig indicated by the index.

For different communication scenarios, there are different methods for designing the index of the SpCellConfig corresponding to the target cell. Examples will be provided as follows.

For example, if the configuration parameter of each candidate cell is included in the SpCellConfig IE, in a case of a non-CA scenario, the MAC CE signaling used for switching indication may include at least the index corresponding to the SpCellConfig corresponding to the target cell. The index may be used to determine the SpCellConfig to support the terminal to accurately switch to the target cell based on the SpCellConfig indicated by the index.

For example, if the configuration parameter of each candidate cell is included in the SpCellConfig IE, in a case of a CA scenario, the MAC CE signaling used for switching indication may include an index corresponding to the SpCellConfig corresponding to one target cell, the index is used to determine the primary cell (PCell), and the index may be used to instruct the terminal to update the target cell to the PCell. For a new Scell, the Scell before the switching may be used as the new Scell after the switching by default; or all Scells before the switching may be released and a new Scell may be reconfigured after the switching is completed by default, which is not limited herein.

For example, if the configuration parameter of each candidate cell is included in a SpCellConfig IE, in a case of a DC scenario, the MAC CE signaling used for switching indication may include an index corresponding to the SpCellConfig for one target cell, the index is used to determine the PCell, and the MAC CE signaling may also include an index corresponding to the SpCellConfig for another target cell, and the other index is used to determine the primary secondary cell (PSCell). Whether different indexes correspond to the PCell or the PSCell may be indicated by the first network device based on an explicit or implicit manner, which is not limited herein. Accordingly, for a new Scell, the Scell before the switching may be used as the new Scell after the switching by default; or the Scell before the switching may be released and the new Scell may be reconfigured after the switching is completed by default, which is not limited herein.

The embodiments of the present disclosure provide a method for designing an indication message, the beam indication information of the target cell includes at least one of: a transmission configuration indicator (TCI) state of the target cell, in which the TCI state of the target cell is used to determine a beam of the target cell; or activation indication information of a TCI state of at least one target cell, in which the TCI state of the target cell is used to determine a beam of the target cell, so as to flexibly indicate the beam-related information of the target cell to the terminal based on MAC CE signaling, and effectively support the terminal to accurately switch to the target cell.

For example, at least the TCI state of the target cell may be included in the MAC CE signaling. Alternatively, TCI states of multiple target cells may be activated in the MAC CE signaling, and then an activated TCI state of a target cell may be indicated through the DCI signaling.

A principle of determining the beam of the target cell based on the indicated and activated TCI state of the target cell may be explained as follows: the TCI state of the target cell may be associated with a reference signal, and the terminal may receive a signal based on the beam in the target cell. If the signal received by a certain beam is the same as the reference signal associated with the TCI state of the target cell, then the beam receiving the signal is the beam of the target cell determined based on the indicated and activated TCI state of the target cell. In short, the beam that may receive the reference signal associated with the indicated TCI state is the determined beam of the target cell, which is not limited herein.

When the TCI states of multiple target cells are activated in the MAC CE signaling, multiple bits may be included in the MAC CE signaling. By setting different values to different bits, the TCI state of a corresponding target cell may be activated, to support indicating the TCI state of a target cell in combination with the DCI signaling, which is not limited herein.

The embodiments of the present disclosure provide a method for designing an indication message, the first indication message is carried in a DCI signaling; in which the DCI signaling includes at least one of: cell indication information of the target cell or beam indication information of the target cell, so as to flexibly instruct the terminal to switch to the target cell based on the DCI signaling.

The indication information used to indicate relevant information of the target cell may be called the cell indication information of the target cell, and the indication information used to indicate beam-related information of the target cell may be called the beam indication information of the target cell.

By designing the cell indication information and/or beam indication information of the target cell for the DCI signaling, it is possible to accurately indicate cell switching to the terminal based on the DCI signaling.

The embodiments of the present disclosure provide a method for designing an indication message, the DCI signaling includes a first indication field, in which a value of the first indication field indicates the cell indication information of the target cell, so that an existing indication field of the DCI signaling may be reused to indicate information related to the target cell, thereby effectively avoiding occupying too much signaling resource overhead.

The first indication field may be, for example, a handover command field in the DCI signaling. For example, the value of the handover command field in the DCI signaling may be configured based on information related to the target cell to instruct the terminal to switch the target cell based on the value of the handover command field in the DCI signaling.

The embodiments of the present disclosure provide a method for designing an indication message, the cell indication information includes any of:
an ID of the target cell;
an ID of an RRC configuration parameter corresponding to the target cell;
an ID of a cell group configuration CellGroupConfig corresponding to the target cell; or
an index corresponding to a special cell configuration SpCellConfig corresponding to the target cell.

That is to say, in the embodiments of the present disclosure, the DCI signaling is designed based on any of the above methods for designing an indication message to instruct the terminal to perform cell switching based on the DCI signaling, which may effectively improve flexibility and applicability of the switching indication and may effectively adapt to a variety of communication scenarios, so that the switching indication may flexibly adapt to personalized needs of the communication scenarios.

It should be noted that for correspondence between the cell indication information of the target cell included in the DCI signaling and the communication scenarios, reference may be made to the above-mentioned correspondence between the cell indication information of the target cell included in the MAC CE signaling and the communication scenarios, which will not be repeated here.

The embodiments of the present disclosure provide a method for designing an indication message, the DCI signaling includes a second indication field, in which a value of the second indication field indicates the beam indication information of the target cell, thereby enabling timely indication of the beam of the target cell and effectively reducing cell switching time.

The second indication field may be, for example, a TCI field in the DCI signaling. For example, the value of the TCI field in the DCI signaling may be configured based on the beam indication information of the target cell to instruct the terminal to switch the target cell based on the value of the TCI field in the DCI signaling.

The embodiments of the present disclosure provide a method for designing an indication message, the beam indication information of the target cell includes at least one of: an indicated and activated TCI state of the target cell, in which the indicated and activated TCI state of the target cell is used to determine a beam of the target cell, thereby effectively indicating the beam-related information of the target cell based on the DCI signaling, so as to support the terminal to accurately switch to the target cell.

For example, the first network device may send a switching command to the terminal, and after sending the switching command, indicate the TCI state of the target cell based on the MAC CE signaling, or activate the TCI states of multiple target cells based on the MAC CE signaling and then indicate an activated TCI state of the target cell by the DCI signaling. The TCI state of the target cell may be used to determine the beam of the target cell.

For example, TCI states of multiple target cells may be activated in advance based on the MAC CE signaling, and then an activated TCI state of a target cell is indicated in a TCI field of the DCI signaling for the switching indication. In case of based on a Rel-17 unified TCI framework (R17 unified TCI framework), the DCI signaling for the switching indication is a downlink DCI signaling (DL DCI).

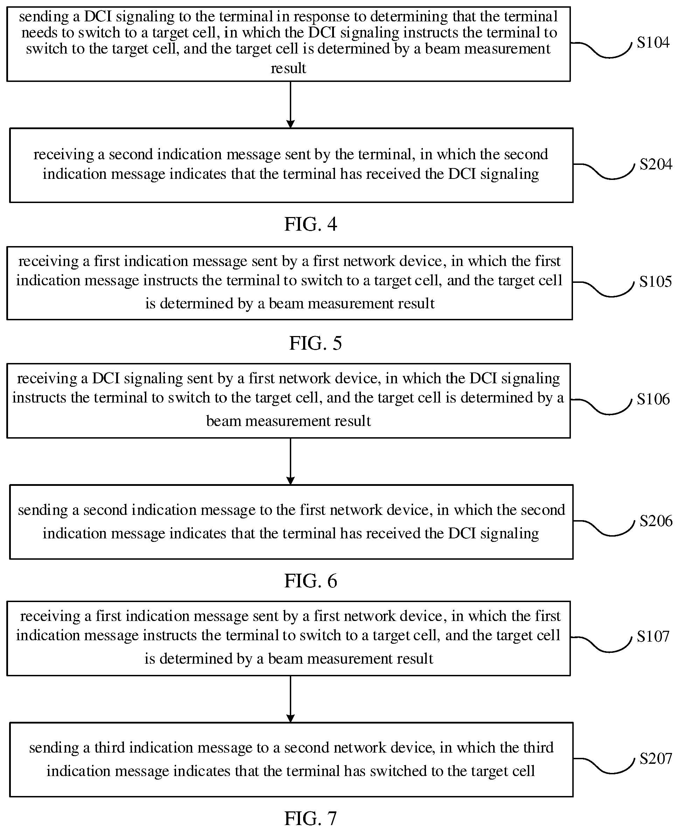

FIG. 4 is a flowchart of a switching indication method according to an embodiment of the present disclosure. The method is performed by a first network device. The switching indication method in this embodiment may be applied in the first network device, which is not limited herein.

In this embodiment, a first indication message sent by the first network device to a terminal may be a DCI signaling. In order to effectively ensure reliability of the switching indication based on the DCI signaling, a corresponding feedback mechanism may be set for the DCI signaling. After the terminal correctly receives the DCI signaling, it may feed back a feedback message to the first network device to indicate that it has correctly received the DCI signaling. The feedback message may be called a second indication message, and the second indication message may be used to indicate that the terminal has received the DCI signaling.

As illustrated in FIG. 4, the method may include but is not limited to the following steps.

At step S104, a DCI signaling is sent to the terminal in response to determining that the terminal needs to switch to a target cell. The DCI signaling instructs the terminal to switch to the target cell, and the target cell is determined by a beam measurement result.

For description of the step S104, reference may be made to the above embodiments, which will not be repeated here.

At step S204, a second indication message sent by the terminal is received, in which the second indication message indicates that the terminal has received the DCI signaling.

After the first network device sends the DCI signaling for the switching indication to the terminal, if it is determined that the second indication message fed back by the terminal is received, the first network device may determine that the terminal has successfully received the DCI signaling.

In the switching indication method provided in the embodiments of the present disclosure, the second indication message includes at least one of: a hybrid automatic repeat request (HARQ) feedback message of the DCI signaling, or a HARQ feedback message of TCI, so as to effectively improve indication flexibility of the feedback message indicating that the terminal has correctly received the DCI signaling, and effectively ensure the reliability of the switching indication based on the DCI signaling.

For example, if the DCI signaling has scheduling information, the HARQ feedback may be performed in a physical uplink shared channel (PUSCH) scheduled by the UL DCI or a physical uplink control channel (PUCCH) scheduled by the DL DCI. If the DCI signaling does not have scheduling information, the HARQ feedback may be performed based on the PUCCH scheduled by the DL DCI. In addition, the HARQ feedback of the DCI signaling may reuse the feedback message of the TCI state, that is, if the HARQ feedback message ACK of the TCI state is received, it is determined that the terminal has successfully received the DCI signaling. In addition, for the MAC CE signaling, it carries a HARQ feedback mechanism, which may guarantee the reliability of the switching indication based on the MAC CE signaling to a certain extent. The corresponding feedback mechanism is designed for the DCI signaling in this embodiment of the present disclosure, which may effectively improve the reliability of the switching indication based on the DCI signaling.

It should be noted that, in the following embodiments, for descriptions of method steps and terms that are the same as or corresponding to those in the above embodiments, reference may be made to the above embodiments, which will not be repeated below.

FIG. 5 is a flowchart of a switching indication method according to an embodiment of the present disclosure. The method is performed by a terminal. The switching indication method in this embodiment may be applied in the terminal, which is not limited herein.

As illustrated in FIG. 5, the method may include but is not limited to the following steps.

At step S105, a first indication message sent by a first network device is received. The first indication message instructs the terminal to switch to a target cell, and the target cell is determined by a beam measurement result.

In this embodiment, the first network device of a serving cell that currently provides communication services to the terminal may send a dynamic switching indication to the terminal, for example, a dynamic switching message may be sent to the terminal, and the dynamic switching message may be referred to as the first indication message. The terminal may receive the first indication message sent by the first network device, i.e., switching to the target cell is triggered based on content indicated by the first indication message.

In this embodiment, when the first network device determines that the terminal needs to switch to the target cell based on the beam measurement result, the first network device sends the first indication message to the terminal, the terminal receives the first indication message sent by the first network device to switch to the target cell. Since the beam measurement result is obtained based on L1 measurement, it does not need to be processed by L3 to obtain a cell measurement result, and the beam measurement result does not rely on an RRC signaling for switching indication, the time overhead for the switching indication is effectively reduced and the switching efficiency is effectively improved.

With the switching indication method provided by the embodiments of the present disclosure, the terminal performs measurement on at least one beam to obtain the beam measurement result, and reports the beam measurement result to the first network device, so as to quickly determine whether the terminal needs to switch to the target cell based on the beam measurement result of L1, and effectively support the first network device to promptly indicate cell switching to the terminal.

The beam measurement result may, for example, include the beam quality in each candidate cell and the beam quality in the serving cell, of course, the beam measurement result may also include any other parameters that can represent beam measurement statuses in each candidate cell and the serving cell, which is not limited herein.

The embodiments of the present disclosure provide a method for designing an indication message, the first indication message is carried in at least one of following signalings:
a MAC CE signaling; or
a DCI signaling.

The embodiments of the present disclosure provide a method for designing an indication message, the first indication message is carried in a MAC CE signaling; in which the MAC CE signaling includes at least one of:
cell indication information of the target cell; or
beam indication information of the target cell.

The embodiments of the present disclosure provide a method for designing an indication message, the cell indication information includes any of:
an ID of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

The embodiments of the present disclosure provide a method for designing an indication message, the beam indication information of the target cell includes at least one of:
a TCI state of the target cell, in which the TCI state of the target cell is used to determine a beam of the target cell; or
activation indication information of a TCI state of at least one target cell, in which the TCI state of the target cell is used to determine a beam of the target cell

The embodiments of the present disclosure provide a method for designing an indication message, the first indication message is carried in a DCI signaling; in which the DCI signaling includes at least one of:
cell indication information of the target cell; or
beam indication information of the target cell.

The embodiments of the present disclosure provide a method for designing an indication message, the DCI signaling includes a first indication field, in which a value of the first indication field indicates the cell indication information of the target cell.

The embodiments of the present disclosure provide a method for designing an indication message, the cell indication information includes any of:
an ID of the target cell;
an ID of an RRC configuration parameter corresponding to the target cell;
an ID of a cell group configuration CellGroupConfig corresponding to the target cell; or
an index corresponding to a special cell configuration SpCellConfig corresponding to the target cell.

The embodiments of the present disclosure provide a method for designing an indication message, the DCI signaling includes a second indication field, in which a value of the second indication field indicates the beam indication information of the target cell.

The embodiments of the present disclosure provide a method for designing an indication message, the beam indication information of the target cell includes at least one of:
an indicated and activated TCI state of the target cell, in which the indicated and activated TCI state of the target cell is used to determine a beam of the target cell

FIG. 6 is a flowchart of a switching indication method according to an embodiment of the present disclosure. The method is performed by a terminal. The switching indication method in this embodiment may be applied in the terminal, which is not limited herein.

As illustrated in FIG. 6, the method may include but is not limited to the following steps.

At step S106, a DCI signaling sent by a first network device is received. The DCI signaling instructs the terminal to switch to the target cell, and the target cell is determined by a beam measurement result.

For description of the step S106, reference may be made to the above embodiments, which will not be repeated here.

At step S206, a second indication message is sent to the first network device, in which the second indication message indicates that the terminal has received the DCI signaling.

After successfully receiving the DCI signaling, the terminal may feedback the second indication message to the first network device. After the first network device sends the DCI signaling for the switching indication to the terminal, if it is determined that the second indication message fed back by the terminal is received, the first network device may determine that the terminal has successfully received the DCI signaling.

In the switching indication method provided in the embodiments of the present disclosure, the second indication message includes at least one of: a HARQ feedback message of the DCI signaling, or a HARQ feedback message of TCI, so as to effectively improve indication flexibility of the feedback message indicating that the terminal has correctly received the DCI signaling, and effectively ensure the reliability of the switching indication based on the DCI signaling.

FIG. 7 is a flowchart of a switching indication method according to an embodiment of the present disclosure. The method is performed by a terminal. The switching indication method in this embodiment may be applied in the terminal, which is not limited herein.

As illustrated in FIG. 7, the method may include but is not limited to the following steps.

At step S107, a first indication message sent by a first network device is received. The first indication message instructs the terminal to switch to a target cell, and the target cell is determined by a beam measurement result.

For description of the step S106, reference may be made to the above embodiments, which will not be repeated here.

At step S207, a third indication message is sent to a second network device. The third indication message indicates that the terminal has switched to the target cell.

If the terminal receives the first indication message sent by the first network device, the terminal may trigger switching from a current serving cell to the target cell based on cell indication information, and then, after switching to the target cell, the terminal may send an indication message to the second network device (for example, a target base station) to indicate that the terminal has switched to the target cell. The indication message may be called the third indication message.

**In** the switching indication method provided in the embodiments of the present disclosure, sending the third indication message to the second network device includes at least one of: sending the third indication message to the second network device based on a random access channel; sending the third indication message to the second network device based on a reserved resource related to the target cell; or sending the third indication message to the second network device based on a resource scheduled by the first indication message, so that the terminal may flexibly indicate to the second network device that the terminal has switched to the target cell determined by the beam measurement result, thereby effectively improving the reliability of transmission of the third indication message.

In the switching indication method provided in the embodiments of the present disclosure, the reserved resource includes at least one of: a PUSCH resource or a scheduling request (SR) resource, so as to effectively improve the practicality of the switching indication.

For example, the terminal may switch to the target cell based on the following methods, such as randomly accessing the target cell, or after randomly accessing the target cell, the terminal may additionally feedback a specific message to inform the second network device that the switching is complete. The specific message may be an RRC ReconfigurationComplete message, or any other possible message, which is not limited herein.

For example, if there is no random access channel (RACH-less), the third indication message may be sent to the second network device based on the reserved resource related to the target cell, or a scheduling request may be parsed from the first indication message and the third indication message may be sent to the second network device based on some channel resources scheduled by the scheduling request, which is not limited herein.

For example, the reserved resources may be pre-configured by the first network device to the terminal, and the reserved resource may be a PUSCH resource and the SR resource.

In the switching indication method provided by the embodiments of the present disclosure, the first network device may also pre-configure configuration information of candidate cells for the terminal. The configuration information may include a configuration of a reference signal for beam measurement of each candidate cell. The TCI state and the reserved resource corresponding to each candidate cell may be configured for the terminal. The terminal may refer to content configured by the first network device to perform beam measurement, cell switching, and confirmation of completion of the switching, which is not limited herein.

In this embodiment, the terminal may receive the first indication message sent by the first network device, in which the first indication message is used to instruct the terminal to switch to the target cell, and the target cell is determined by the beam measurement result. After successfully switching to the target cell, the terminal sends the third indication message to the second network device, in which the third indication message is used to indicate that the terminal has switched to the target cell, so as to promptly inform the second network device that the terminal has switched to the target cell determined by the beam measurement result, and promptly support the second network device to subsequently provide communication services to the terminal based on the target cell.

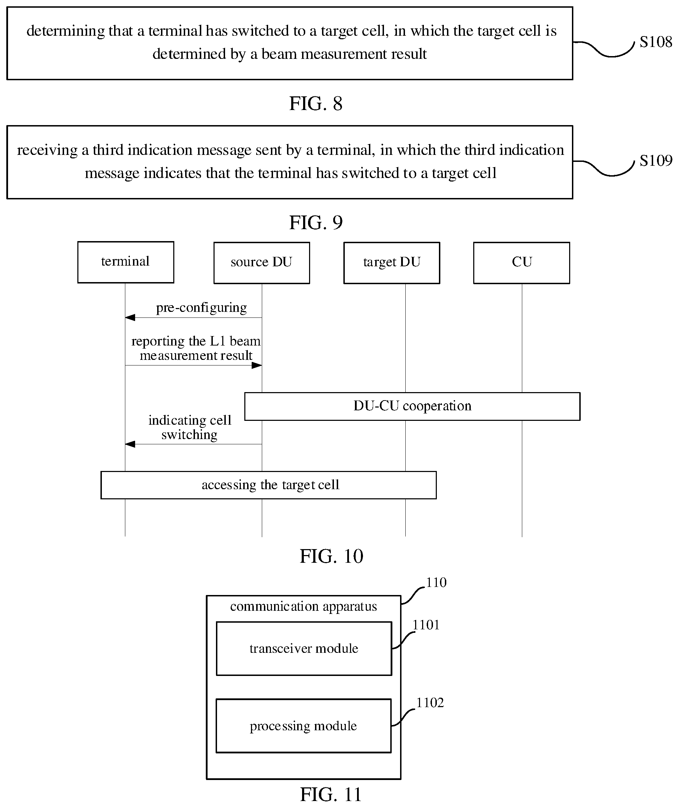

FIG. 8 is a flowchart of a switching indication method according to an embodiment of the present disclosure. The method is performed by a second network device. The switching indication method in this embodiment may be applied in the second network device, which is not limited herein.

The second network device may be, for example, a target base station, which is not limited herein.

As illustrated in FIG. 8, the method may include but is not limited to the following steps.

At step S108, it is determined that a terminal has switched to a target cell, in which the target cell is determined by a beam measurement result.

In this embodiment, after successfully switching to the target cell, the terminal informs the second network device that it has successfully switched to the target cell, so that the second network device may promptly learn that the terminal has switched to the target cell determined by the beam measurement result, so as to promptly perform subsequent communication services.

FIG. 9 is a flowchart of a switching indication method according to an embodiment of the present disclosure. The method is performed by a second network device. The switching indication method in this embodiment may be applied in the second network device, which is not limited herein.

The second network device may be, for example, a target base station, which is not limited herein.

As illustrated in FIG. 9, the method may include but is not limited to the following steps.

At step S109, a third indication message sent by a terminal is received, in which the third indication message indicates that the terminal has switched to a target cell.

In this embodiment, after successfully switching to the target cell, the terminal sends the third indication message to the second network device, in which the third indication message is used to indicate that the terminal has switched to the target cell, so that the second network device may promptly learn that the terminal has switched to the target cell determined by the beam measurement result.

In the switching indication method provided by the embodiments of the present disclosure, receiving the third indication message sent by the terminal including at least one of: receiving the third indication message sent by the terminal based on a random access channel; receiving the third indication message sent by the terminal based on a reserved resource related to a target cell; or receiving the third indication message sent by the terminal based on a resource scheduled by the first indication message, in which the first indication message is used for a first network device to instruct the terminal to switch to the target cell, so that the second network device may flexibly learn that the terminal has switched to the target cell determined by the beam measurement result, thereby effectively improving the flexibility and reliability of transmission of the third indication message.

In the switching indication method provided in the embodiments of the present disclosure, the reserved resource includes at least one of: a PUSCH resource; or an SR resource.

The network device provided by the embodiments of the present disclosure may be composed of a central unit (CU) and a distributed unit (DU), in which the CU may also be referred to as a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU. As shown in FIG. 10, FIG. 10 is a flowchart of a switching indication method provided by an embodiment of the present disclosure. In FIG. 10, an example is given in which the first network device includes a source DU, the second network device is a target DU, and the CU is further included. The CU centrally controls the source DU and the target DU to support cell switching of the terminal.

The source DU may pre-configure for the terminal, for example, configuration information of the candidate cell, which includes the configuration of the reference signal for beam measurement of each candidate cell, and may further configure the TCI state for the terminal, as well as the reserved resource corresponding to each candidate cell, which is not limited herein. The terminal performs L1-based beam measurement based on the content pre-configured by the source DU to obtain the beam measurement result, and reports the beam measurement result to the source DU. The CU centrally controls the source DU and the target DU to support cell switching of the terminal. The source DU may send the first indication message to the terminal, and the terminal switches to the target cell based on the content indicated by the first indication message, and randomly accesses the target cell. Then, the terminal may send the third indication message to the target DU, that is, the terminal interacts with the target DU to inform the target DU that the terminal has accessed the target cell to complete the cell switching procedure.

FIG. 11 is a block diagram of a communication apparatus provided in an embodiment of the present disclosure. The communication apparatus 110 shown in FIG. 11 may include a transceiver module 1101 and a processing module 1102. The transceiver module 1101 may include a sending module and/or a receiving module, in which the sending module is used to implement a sending function, the receiving module is used to implement a receiving function, and the transceiver module 1101 may implement the sending function and/or the receiving function.

The communication apparatus 110 may be a terminal (such as the terminal in the above method embodiments), an apparatus in the terminal, or an apparatus capable of being used in combination with the terminal. Or, the communication apparatus 110 may be a network device (such as the first network device and/or the second network device in the above method embodiments), an apparatus within a network device, or an apparatus capable of being used in combination with the network device.

The communication apparatus 110, on the side of the first network device, includes: a transceiver module 1101.

The transceiver module 1101 is configured to send a first indication message to a terminal in response to determining that the terminal needs to switch to a target cell, in which the first indication message instructs the terminal to switch to the target cell, and the target cell is determined by a beam measurement result.

In the switching indication method provided by the embodiments of the present disclosure, the method further includes:
receiving the beam measurement result reported by the terminal; and
determining, according to the beam measurement result, that the terminal needs to switch to the target cell.

In the switching indication method provided by the embodiments of the present disclosure, the first indication message is carried in at least one of following signalings:
a MAC CE signaling; or
a DCI signaling.

In the switching indication method provided by the embodiments of the present disclosure, the first indication message is carried in a MAC CE signaling, in which the MAC CE signaling includes at least one of:
cell indication information of the target cell; or
beam indication information of the target cell.

In the switching indication method provided by the embodiments of the present disclosure, the cell indication information includes any of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

In the switching indication method provided by the embodiments of the present disclosure, the beam indication information of the target cell includes at least one of:
a TCI state of the target cell, in which the TCI state of the target cell is used to determine a beam of the target cell; or
activation indication information of a TCI state of at least one target cell, in which the TCI state of the target cell is used to determine a beam of the target cell.

In the switching indication method provided by the embodiments of the present disclosure, the first indication message is carried in a DCI signaling, in which the DCI signaling includes at least one of:
cell indication information of the target cell; or
beam indication information of the target cell.

In the switching indication method provided by the embodiments of the present disclosure, the DCI signaling includes a first indication field, a value of the first indication field indicates the cell indication information.

In the switching indication method provided by the embodiments of the present disclosure, the cell indication information includes any of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

In the switching indication method provided by the embodiments of the present disclosure, the DCI signaling includes a second indication field, a value of the second indication field indicates the beam indication information of the target cell.

In the switching indication method provided by the embodiments of the present disclosure, the beam indication information of the target cell includes at least one of:
an indicated and activated TCI state of the target cell, in which the indicated and activated TCI state of the target cell is used to determine a beam of the target cell.

In the switching indication method provided by the embodiments of the present disclosure, the method includes:
receiving a second indication message sent by the terminal, in which the second indication message indicates that the terminal has received the DCI signaling.

In the switching indication method provided by the embodiments of the present disclosure, the second indication message includes at least one of:
a HARQ feedback message of the DCI signaling; or
a HARQ feedback message of a TCI.

In the embodiments, when it is determined that the terminal needs to switch to the target cell based on the beam measurement result, the first indication message is sent to the terminal, in which the first indication message is used to instruct the terminal to switch to the target cell. Since the beam measurement result is the measurement result of L1, it does not need to be processed by L3 to obtain a cell measurement result, and the beam measurement result does not rely on an RRC signaling for switching indication, the time overhead for the switching indication is effectively reduced and the switching efficiency is effectively improved.

The communication apparatus 110, on the side of the terminal, includes: a transceiver module 1101.

The transceiver module 1101 is configured to receive a first indication message sent by a first network device, in which the first indication message instructs the terminal to switch to a target cell, and the target cell is determined by a beam measurement result.

In the switching indication method provided by the embodiments of the present disclosure, the method further includes:
obtaining the beam measurement result by performing measurement on at least one beam; and
reporting the beam measurement result to the first network device.

In the switching indication method provided by the embodiments of the present disclosure, the first indication message is carried in at least one of following signalings:
a MAC CE signaling; or
a DCI signaling.

In the switching indication method provided by the embodiments of the present disclosure, the first indication message is carried in a MAC CE signaling, in which the MAC CE signaling includes at least one of:
cell indication information of the target cell; or
beam indication information of the target cell.

In the switching indication method provided by the embodiments of the present disclosure, the cell indication information includes any of:
an ID of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

In the switching indication method provided by the embodiments of the present disclosure, the beam indication information of the target cell includes at least one of:
a TCI state of the target cell, in which the TCI state of the target cell is used to determine a beam of the target cell; or
activation indication information of a TCI state of at least one target cell, in which the TCI state of the target cell is used to determine a beam of the target cell.

In the switching indication method provided by the embodiments of the present disclosure, the first indication message is carried in a DCI signaling, in which the DCI signaling includes at least one of:
cell indication information of the target cell; or
beam indication information of the target cell.

In the switching indication method provided by the embodiments of the present disclosure, the DCI signaling includes a first indication field, a value of the first indication field indicates the cell indication information.

In the switching indication method provided by the embodiments of the present disclosure, the cell indication information includes any of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

In the switching indication method provided by the embodiments of the present disclosure, the DCI signaling includes a second indication field, a value of the second indication field indicates the beam indication information of the target cell.

In the switching indication method provided by the embodiments of the present disclosure, the beam indication information of the target cell includes at least one of:
an indicated and activated TCI state of the target cell, in which the indicated and activated TCI state of the target cell is used to determine a beam of the target cell.

In the switching indication method provided by the embodiments of the present disclosure, the method further includes:
sending a second indication message to the first network device, in which the second indication message indicates that the terminal has received the DCI signaling.

In the switching indication method provided by the embodiments of the present disclosure, the second indication message includes at least one of:
a HARQ feedback message of the DCI signaling; or
a HARQ feedback message of a TCI.

In the switching indication method provided by the embodiments of the present disclosure, the method further includes:
sending a third indication message to a second network device, in which the third indication message indicates that the terminal has switched to the target cell.

In the switching indication method provided by the embodiments of the present disclosure, sending the third indication message to the second network device includes at least one of:
sending the third indication message to the second network device based on a random access channel;
sending the third indication message to the second network device based on a reserved resource related to the target cell; or
sending the third indication message to the second network device based on a resource scheduled by the first indication message.

In the switching indication method provided by the embodiments of the present disclosure, the reserved resource includes at least one of:
a PUSCH resource; or
an SR resource.

In this embodiment, when the first network device determines that the terminal needs to switch to the target cell based on the beam measurement result, the first network device sends the first indication message to the terminal, the terminal receives the first indication message sent by the first network device to switch to the target cell. Since the beam measurement result is obtained based on L1 measurement, it does not need to be processed by L3 to obtain a cell measurement result, and the beam measurement result does not rely on an RRC signaling for switching indication, the time overhead for the switching indication is effectively reduced and the switching efficiency is effectively improved.

The communication apparatus 110, on the side of the second network device, includes: a processing module 1102.

The processing module 1102 is configured to determine that a terminal has switched to a target cell, in which the target cell is determined by a beam measurement result.

In the switching indication method provided by the embodiments of the present disclosure, determining that the terminal has switched to the target cell includes:
receiving a third indication message sent by the terminal, in which the third indication message indicates that the terminal has switched to the target cell.

In the switching indication method provided by the embodiments of the present disclosure, receiving the third indication message sent by the terminal includes at least one of:
receiving the third indication message sent by the terminal based on a random access channel;
receiving the third indication message sent by the terminal based on a reserved resource related to the target cell; or
receiving the third indication message sent by the terminal based on a resource scheduled by a first indication message, in which the first indication message is used for the first network device to indicate that the terminal is switched to the target cell.

In the switching indication method provided by the embodiments of the present disclosure, the reserved resource includes at least one of:
a PUSCH resource; or
an SR resource.

In this embodiment, after successfully switching to the target cell, the terminal informs the second network device that it has successfully switched to the target cell, so that the second network device may promptly learn that the terminal has switched to the target cell determined by the beam measurement result, so as to promptly perform subsequent communication services.

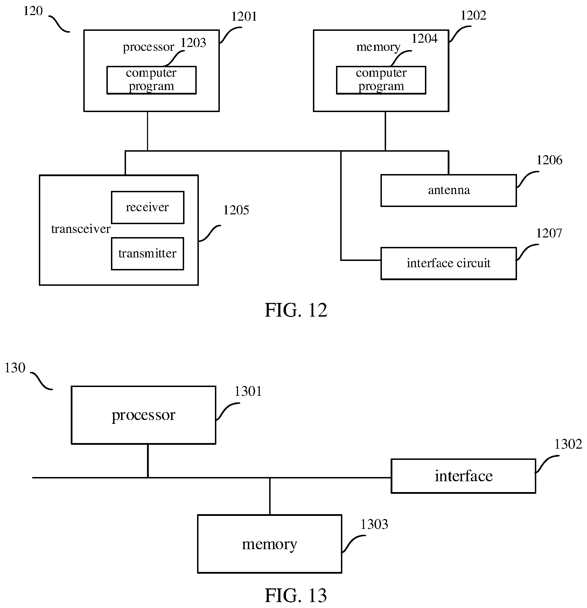

FIG. 12 is another block diagram of a communication apparatus according to an embodiment of the present disclosure. The communication apparatus 120 may be a terminal (such as the terminal in the above method embodiments), a network device (such as the first network device and/or the second network device in the above method embodiments), a chip, a chip system, a processor, etc. that supports the network device to implement the method, or a chip, a chip system, a processor, etc. that supports the terminal to implement the method. The apparatus may be used to implement the method in the above method embodiments. For details, please refer to the above method embodiments.

The communication apparatus 120 may include one or more processors 1201. The processor 1201 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 120 may also include one or more memories 1202 for storing the computer program 1204. The computer program 1203 may be stored in the processor 1201, and the processor 1201 executes the computer program 1204 and/or the computer program 1203, which may cause the communication apparatus 120 to implement the method in the above method embodiments.

Optionally, the memory 1202 may also store data. The communication apparatus 120 and the memory 1202 may be set up separately or integrated together.

Optionally, the communication apparatus 120 may also include a transceiver 1205 and an antenna 1206. The transceiver 1205 may be called a transceiver unit, a transceiver machine, or a transceiver circuit, etc., to implement the receiving and sending function. The transceiver 1205 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 120 may also include one or more interface circuits 1207. The interface circuit 1207 is used to receive code instructions and transmit the code instructions to the processor 1201. The processor 1201 runs the code instructions to cause the communication apparatus 120 to implement the method in the above method embodiments.

In one implementation, the processor 1201 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 1201 may store a computer program 1203. When the computer program 1203 is running on the processor 1201, the communication apparatus 120 is caused to implement the method in the above method embodiments. The computer program 1203 may be solidified in the processor 1201, in which case the processor 1201 may be implemented in hardware.

In an implementation, the communication apparatus 120 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a terminal (such as the terminal in the method embodiments) or a network device (such as the first network device and/or the second network device in the above method embodiments), but the scope of the communication apparatus in the disclosure is not limited to this, and the structure of the communication apparatus may not be restricted by FIG. 12. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to the structural diagram of a chip in FIG. 13. The chip shown in FIG. 13 includes a processor 1301 and an interface 1302. There may be one or more processors 1301, and there may be one or more interfaces 1302.

For the situation that the chip is used to perform the functions of the terminal in the embodiments of the present disclosure: the processor 1301 is used to implement S105 in FIG. 5, or S106 and S206 in FIG. 6, or S107 and S207 in FIG. 7, etc.

For the situation that the chip is used to perform the functions of the network device in the embodiments of the present disclosure: the processor 1301 is used to implement S102 in FIG. 2, or S103 in FIG. 3, or S104 and S204 in FIG. 4, or S108 in FIG. 8, or S109 in FIG. 9, etc.

Optionally, the chip also includes a memory 1303, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a communication system is provided. The communication system includes the communication apparatus as a terminal (such as the terminal in the above method embodiments) and the communication apparatus as a network device (such as the first network device and/or the second network device in the above method embodiments) in the foregoing embodiment of FIG. 11, or, the communication system includes the communication apparatus as a terminal (such as the terminal in the above method embodiments) and the communication apparatus as a network device (such as the first network device and/or the second network device in the above method embodiments) in the foregoing embodiment of FIG. 12.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order. The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A switching indication method, performed by a first network device, comprising:
sending a first indication message to a terminal in response to determining that the terminal needs to switch to a target cell, wherein the first indication message instructs the terminal to switch to the target cell, and the target cell is determined by a beam measurement result.

2. The method of claim 1, further comprising:
receiving the beam measurement result reported by the terminal; and
determining, according to the beam measurement result, that the terminal needs to switch to the target cell.

3. The method of any of claims 1-2, wherein the first indication message is carried in at least one of following signalings:
a media access control control element (MAC CE) signaling; or
a downlink control information (DCI) signaling.

4. The method of any of claims 1-3, wherein the first indication message is carried in a MAC CE signaling, wherein the MAC CE signaling comprises at least one of:
cell indication information of the target cell; or
beam indication information of the target cell.

5. The method of claim 4, wherein the cell indication information comprises any one of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

6. The method of claim 4, wherein the beam indication information of the target cell comprises at least one of:
a transmission configuration indicator (TCI) state of the target cell, wherein the TCI state of the target cell is used to determine a beam of the target cell; or
activation indication information of a TCI state of at least one target cell, wherein the TCI state of the target cell is used to determine a beam of the target cell.

7. The method of any of claims 1-3, wherein the first indication message is carried in a DCI signaling, wherein the DCI signaling comprises at least one of:
cell indication information of the target cell; or
beam indication information of the target cell.

8. The method of claim 7, wherein the DCI signaling comprises a first indication field, a value of the first indication field indicates the cell indication information.

9. The method of claim 7 or 8, wherein the cell indication information comprises at least one of:
an ID of the target cell;
an ID of an RRC configuration parameter corresponding to the target cell;
an ID of a cell group configuration CellGroupConfig corresponding to the target cell; or
an index corresponding to a special cell configuration SpCellConfig corresponding to the target cell.

10. The method of claim 7, wherein the DCI signaling comprises a second indication field, a value of the second indication field indicates the beam indication information of the target cell.

11. The method of claim 7 or 10, wherein the beam indication information of the target cell comprises at least one of:
an indicated and activated TCI state of the target cell, wherein the indicated and activated TCI state of the target cell is used to determine a beam of the target cell.

12. The method of any of claims 7-11, further comprising:
receiving a second indication message sent by the terminal, wherein the second indication message indicates that the terminal has received the DCI signaling.

13. The method of claim 12, wherein the second indication message comprises at least one of:
a hybrid automatic repeat request (HARQ) feedback message of the DCI signaling; or
a HARQ feedback message of a TCI.

14. A switching indication method, performed by a terminal, comprising:
receiving a first indication message sent by a first network device, wherein the first indication message instructs the terminal to switch to a target cell, and the target cell is determined by a beam measurement result.

15. The method of claim 14, further comprising:
obtaining the beam measurement result by performing measurement on at least one beam; and
reporting the beam measurement result to the first network device.

16. The method of any of claims 14-15, wherein the first indication message is carried in at least one of following signalings:
a media access control control element (MAC CE) signaling; or
a downlink control information (DCI) signaling.

17. The method of any of claims 14-16, wherein the first indication message is carried in a MAC CE signaling, wherein the MAC CE signaling comprises at least one of:
cell indication information of the target cell; or
beam indication information of the target cell.

18. The method of claim 17, wherein the cell indication information comprises any one of:
an identifier (ID) of the target cell;
an ID of a radio resource control (RRC) configuration parameter corresponding to the target cell;
an ID of a cell group configuration CellGroupConfig corresponding to the target cell; or
an index corresponding to a special cell configuration SpCellConfig corresponding to the target cell.

19. The method of claim 17, wherein the beam indication information of the target cell comprises at least one of:
a transmission configuration indicator (TCI) state of the target cell, wherein the TCI state of the target cell is used to determine a beam of the target cell; or
activation indication information of a TCI state of at least one target cell, wherein the TCI state of the target cell is used to determine a beam of the target cell.

20. The method of any of claims 14-16, wherein the first indication message is carried in a DCI signaling, wherein the DCI signaling comprises at least one of:
cell indication information of the target cell; or
beam indication information of the target cell.

21. The method of claim 20, wherein the DCI signaling comprises a first indication field, a value of the first indication field indicates the cell indication information.

22. The method of claim 20 or 21, wherein the cell indication information comprises at least one of:
an ID of the target cell;
an ID of an RRC configuration parameter corresponding to the target cell;
an ID of a cell group configuration CellGroupConfig corresponding to the target cell; or
an index corresponding to a special cell configuration SpCellConfig corresponding to the target cell.

23. The method of claim 20, wherein the DCI signaling comprises a second indication field, a value of the second indication field indicates the beam indication information of the target cell.

24. The method of claim 20 or 23, wherein the beam indication information of the target cell comprises at least one of:
an indicated and activated TCI state of the target cell, wherein the indicated and activated TCI state of the target cell is used to determine a beam of the target cell.

25. The method of any of claims 20-24, further comprising:
sending a second indication message to the first network device, wherein the second indication message indicates that the terminal has received the DCI signaling.

26. The method of claim 25, wherein the second indication message comprises at least one of:
a hybrid automatic repeat request (HARQ) feedback message of the DCI signaling; or
a HARQ feedback message of a TCI.

27. The method of any of claims 14-26, further comprising:
sending a third indication message to a second network device, wherein the third indication message indicates that the terminal has switched to the target cell.

28. The method of claim 27, wherein sending the third indication message to the second network device comprises at least one of:
sending the third indication message to the second network device based on a random access channel;
sending the third indication message to the second network device based on a reserved resource related to the target cell; or
sending the third indication message to the second network device based on a resource scheduled by the first indication message.

29. The method of claim 28, wherein the reserved resource comprises at least one of:
a physical uplink shared channel (PUSCH) resource; or
a scheduling request (SR) resource.

30. A switching indication method, performed by a second network device, comprising:
determining that a terminal has switched to a target cell, wherein the target cell is determined by a beam measurement result.

31. The method of claim 30, wherein determining that the terminal has switched to the target cell comprises:
receiving a third indication message sent by the terminal, wherein the third indication message indicates that the terminal has switched to the target cell.

32. The method of claim 31, wherein receiving the third indication message sent by the terminal comprises at least one of:
receiving the third indication message sent by the terminal based on a random access channel;
receiving the third indication message sent by the terminal based on a reserved resource related to the target cell; or
receiving the third indication message sent by the terminal based on a resource scheduled by a first indication message, wherein the first indication message is used for the first network device to indicate that the terminal is switched to the target cell.

33. The method of claim 32, wherein the reserved resource comprises at least one of:
a physical uplink shared channel (PUSCH) resource; or
a scheduling request (SR) resource.

34. A communication apparatus, comprising:
a transceiver module, configured to send a first indication message to a terminal in response to determining that the terminal needs to switch to a target cell, wherein the first indication message instructs the terminal to switch to the target cell, and the target cell is determined by a beam measurement result.

35. A communication apparatus, comprising:
a transceiver module, configured to receive a first indication message sent by a first network device, wherein the first indication message instructs a terminal to switch to a target cell, and the target cell is determined by a beam measurement result.

36. A communication apparatus, comprising:
a processing module, configured to determine that a terminal has switched to a target cell, wherein the target cell is determined by a beam measurement result.

37. A communication system, comprising a first network device, a terminal and a second network device; wherein the first network device performs the method of any of claims 1-13, the terminal performs the method of any of claims 14-29, the second network device performs the method of any of claims 30-33.

38. A computer-readable storage medium for storing instructions, wherein when the instructions are executed, the method of any one of claims 1 to 33 is implemented.
